# EUROPÄISCHE PATENTSCHRIFT

(11) **EP 2 414 227 B1**
(45) Veröffentlichungstag und Bekanntmachung des Hinweises auf die Patenterteilung: **01.01.2014**
(21) Anmeldenummer: 10714224.2
(22) Anmeldetag: 30.03.2010
(51) Int. Cl.: B64C 1/12, B64C 1/40, B32B 5/32, B32B 27/02, B32B 27/04, B64D 11/00, B64D 13/00

(54) **RUMPFSEGMENT UND VERFAHREN ZUR HERSTELLUNG DES RUMPFSEGMENTS**
FUSELAGE SEGMENT AND ITS PRODUCTION METHOD
SEGMENT DE FUSELAGE ET SON PROCÉDÉ DE FABRICATION

(30) Priorität: 01.04.2009 DE 102009015856; 01.04.2009 US 165527 P
(43) Veröffentlichungstag der Anmeldung: 08.02.2012
(73) Patentinhaber: Airbus Operations GmbH, 21129 Hamburg (DE)
(72) Erfinder: GOEHLICH, Robert Alexander, 22761 Hamburg (DE)
(74) Vertreter: Marschall, Stefan
(86) Internationale Anmeldenummer: PCT/EP2010/054247
(87) Internationale Veröffentlichungsnummer: WO 2010/112527

(56) Entgegenhaltungen:
- EP-A1- 0 730 951
- EP-A1- 1 510 454
- WO-A1-02/098734
- DE-A1-102007 003 278
- US-A1- 2008 185 478

## Beschreibung

Die Erfindung betrifft ein Rumpfsegment eines Flugzeugrumpfes nach dem Oberbegriff des Anspruchs 1 und ein Verfahren zur Herstellung eines derartigen Rumpfsegments. Der Stand der Technik ist z.B durch die Dokumente US 2008/0185478 A1 oder EP 0730951 A1 gegeben.

Ein bekanntes Rumpfsegment ist in der DE 10 2007 003 275 A1 der Anmelderin offenbart. Dieses Rumpfsegment ist als ein Schalenelement mit zwei CFK-Häuten ausgeführt, zwischen denen ein Kern mit einer Wabenstruktur oder mit einer geschäumten Struktur angeordnet ist. Das Schalenelement bildet mit einer Vielzahl von gleichartigen Schalenelementen einen Flugzeugrumpf, der zur Stabilisierung mit einer Vielzahl von Stringern und Spanten verstärkt ist. Sämtliche Leitungskanäle zur Systeminstallation wie zum Beispiel elektrische Leitungen und Klimarohre sind an entsprechenden Haltern der Stringer bzw. Spanten befestigt.

Nachteilig an dieser Lösung ist, dass Ausrüstungssysteme und Kabinenelemente getrennt von der Primärstruktur voneinander installiert werden. Zur Befestigung der Leitungskanäle sind zahlreiche Halter notwendig, die die Rumpfmontage aufwendig machen. Ferner wirken sich die Halter nachteilig auf das Flugzeuggewicht aus.

Aufgabe der vorliegenden Erfindung ist es, ein Rumpfsegment eines Flugzeugrumpfes, das die vorgenannten Nachteile beseitigt und eine vereinfachte Montage ermöglicht, sowie ein Verfahren zur Herstellung eines derartigen Rumpfsegments zu schaffen.

Diese Aufgabe wird gelöst durch ein Rumpfsegment mit den Merkmalen des Anspruchs 1 und durch ein Verfahren nach Anspruch 8.

Ein erfindungsgemäßes Rumpfsegment weist einen Kern auf, der von einer kabinenseitigen Innenhaut und einer Außenhaut begrenzt ist. Erfindungsgemäß sind Leitungskanäle zur Systeminstallation in dem Kern integriert.

Die erfindungsgemäße Lösung hat den Vorteil, dass Halter zur Befestigung der Leitungskanäle wie Klimarohre nicht notwendig sind. Hierdurch wird die Komplexität der Montage des Flugzeugrumpfes herabgesetzt. Des Weiteren ist durch den Verzicht auf die Halter das Flugzeuggewicht gegenüber bekannten Flugzeugen mit Halterlösungen reduziert. Durch eine entsprechende Positionierung der Leitungskanäle zueinander können zum Beispiel elektromagnetische Wechselwirkungen zwischen stromführenden Kabeln gezielt unterbunden werden. Durch den Wegfall der Halter können ferner die Montage- und Herstellkosten verringert werden. Weiterhin kann das erfindungsgemäße Rumpfsegment derart ausgebildet sein, dass auf Stringer und Spanten bzw. sonstige Längs- und Umfangsversteifungen des Flugzeugrumpfes verzichtet werden kann, was sich weiterhin positiv auf die Montage und das Flugzeuggewicht auswirkt. Das Rumpfsegment kann in seiner Struktur entsprechend den auftretenden Belastungen optimiert werden.

Bei einem Ausführungsbeispiel ist das Rumpfsegment mehrteilig aufgebaut. Hierbei ist der Kern getrennt von der Außenhaut und der Innenhaut hergestellt.

Bei einem weiteren Ausführungsbeispiel hat das Rumpfsegment keine Sandwichstruktur, sondern eine einteilige Schaumstruktur, bei der die Innenhaut, die Außenhaut und der Kern einstückig ausgebildet sind. D.h., die Innenhaut und die Außenhaut sind nicht mit dem Kern verklebt oder auf ähnliche Weise mit dem Kern verbunden, sondern während eines Herstellungsschritts des Kerns entstanden. D.h., die Innenhaut und die Außenhaut bestehen aus dem gleichen Schaummaterial, das bereichsweise einer andersartigen Behandlung unterzogen wird. Bei diesem Ausführungsbeispiel ist es vorteilhaft, wenn das Schaummaterial kohlenstofffaserverstärkt ist, so dass sich quasi die Kohlenstofffaserverstärkung von der Außenhaut durch den Kern zur Innenhaut erstreckt.

Der Kern und die Außenhaut bzw. Innenhaut können unterschiedliche Materialhärten aufweisen. Die Materialhärte des Kerns nimmt von einem kabinenseitigen Bereich in Richtung der Außenhaut zu. Hierdurch kann die Stabilität des Rumpfsegment sowie durch die geringer Materialhärte im kabinenseitigen Bereich die Isolation verbessert werden.

Der Kern kann aus einem mehrschichtigen Schaummaterial gebildet sein, was eine gezielte Isolation unterstützt. Durch bewusste Steuerung des Schaummaterials wird eine Kondensation innerhalb des Rumpfsegmentes stark reduziert, da kaum sprunghafte Temperaturgefälle auftreten.

Bei einer Variante sind die Leitungskanäle rohrartige Elemente.

Zur weiteren Senkung des Flugzeuggewichts sind bei einer anderen Variante die Leitungskanäle derart in den Kern integriert, dass deren Wandung von dem Kernmaterial gebildet ist.

Die Innenhaut kann eine Seitenwandung einer Kabine darstellen. Die Ausführung der Seitenwandung als einen Teil der Primärstruktur bewirkt eine Reduzierung der Kabinenkomponenten und führt somit zu einer weiteren Herabsetzung der Montagekomplexität.

Ein Ausführungsbeispiel eines erfindungsgemäßen Verfahrens sieht vor, dass die Leitungskanäle während der Herstellung des Kerns in diesen eingebracht werden.

Ein anderes Ausführungsbeispiel sieht vor, dass die Leitungskanäle nach der Herstellung des Kerns in diesen eingebracht werden. Hierzu werden die Leitungskanäle bei der Herstellung des Kerns durch geeignete platzhaltende Füllmaterialien abgebildet bzw. ersetzt. Die Füllmaterialien werden nach der Herstellung des Kerns aus diesem entfernt, so dass das Kernmaterial selbst die Wandungen der Leitungskanäle bildet. Die Füllstoffe können zum Beispiel auf Wachs basierende Rohrkörper sein, die sich bei entsprechender Behandlung nach der Herstellung des Kerns verflüssigen, aus dem Kern ausströmen und somit ein entsprechend ausgebildeten Hohlraum als Leitungskanal in dem Kern entsteht.

Ein weiteres erfindungsgemäßes Verfahren sieht vor, dass nach der Entnahme des Rumpfsegments aus der Werkzeugform die Innenhaut, die Außenhaut und der Kern bereits Ihre Endstruktur mit den geforderten Materialeigenschaften und Materialstrukturen aufweisen.

Es ist jedoch auch möglich, das Schaummaterial und insbesondere die Innenhaut und die Außenhaut in einem Folgeschritt nach der Entnahme des Rumpfsegments aus der Werkzeugform mit den geforderten Materialeigenschaften wie zum Beispiel dem Härtegrad zu versehen. Vorstellbar ist zum Beispiel eine Behandlung unter UV-Licht.

Als geeignetes Schaummaterial ist sowohl ein kunststoffbasiertes Material als auch ein metallbasiertes Material vorstellbar. Ebenso sind die Materialien der Innenhaut und der Außenhaut nicht auf CFK-Werkstoffe beschränkt, sondern es sind ebenfalls andere faserverstärkte Verbundmaterialien wie glasfaserverstärkte Werkstoffe (GFK-Werkstoffe), Kunststoff-Metall-Legierungen sowie reine Metall-legierungen vorstellbar. Weiterhin ist es vorstellbar, dass die Innenhaut und die Außenhaut aus unterschiedlichen Materialien bestehen.

Die Leitungskanäle beschränken sich nicht auf die genannten Beispiele, sondern erstrecken sich auf sämtliche, in einem Flugzeug zu verlegende Routen. Weitere Beispiele sind elektrische Leitungen für die Stromversorgung des Bordnetzes, Signalleitungen zur Flugzeugsteuerung und Wasserleitungen.

Durchbrüche für Fenster bzw. Türen werden entweder während der Herstellung der Rumpfzelle oder nachträglich in die Rumpfzelle eingebracht.

Die axiale Länge des Rumpfsegments sowie seine Erstreckung in Umfangsrichtung können variieren. So ist es vorstellbar, das Rumpfsegment als ein Schalenelement auszubilden, das sich im Prinzip über die gesamte Flugzeuglänge erstreckt. Ebenso ist es vorstellbar, dass Rumpfsegment als ein Tonnenelement auszuführen, das über Querstoßverbindungen zum Flugzeugrumpf fügbar ist.

Sonstige vorteilhafte Ausführungsbeispiele sind Gegenstand weiterer Unteransprüche.

Im Folgenden werden bevorzugte Ausführungsbeispiele der Erfindung anhand einer schematischen Darstellung näher erläutert.

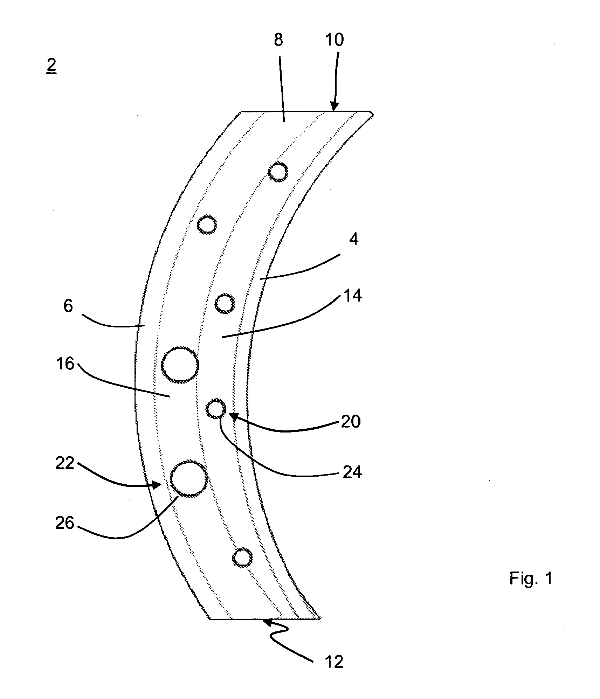

Die einzige Figur 1 zeigt einen Querschnitt durch ein erfindungsgemäßes Rumpfsegment 2 eines Flugzeugrumpfes. Das Rumpfsegment 2 ist als ein bogenförmiges Schalenelement in Sandwichbauweise mit einer Innenhaut 4 und einer Außenhaut 6 ausgebildet, zwischen denen ein Kern 8 angeordnet ist. Das Rumpfsegment 2 wird im Bereich seiner Schmalseiten 10, 12 mit anderen nicht dargestellten erfindungsgemäßen Rumpfsegmenten zu einer Rumpftonne montiert.

Die Innenhaut 4 bildet eine Seitenwandung einer Flugzeugkabine. Die Außenhaut 6 dient als per se bekannte Außenfläche eines Flugzeugrumpfes und schützt den Kern 8 vor Umgebungseinflüssen. Die Innenhaut 4 und die Außenhaut 6 bestehen aus einem kohlenstofffaserverstärkten Werkstoff (CFK-Werkstoff) und sind mit dem Kern 8 verbunden. Die Innenhaut 4 und die Außenhaut weisen eine höhere Materialhärte als der Kern 8 auf.

Der Kern 8 ist aus einem Schaummaterial gebildet und weist eine radial innenliegende Schicht 14 und eine radial außenliegende Schicht 16 auf. Die radial innenliegende Schicht 14 weist zur verbesserten Isolation eine geringere Härte als die radial außenliegende Schicht 16 auf.

In dem Kern 8 sind Leitungskanäle 20, 22 zur Systeminstallation wie zum Beispiel stromführende Kabelstränge, datensignalführende Kabelstränge oder Klimarohre integriert. Stellvertretend für sämtliche Leitungskanäle werden in der Figur lediglich zwei Leitungskanäle 20, 22 mit Bezugszeichen versehen. Die Leitungskanäle 20, 22 sind durch in den Kern 8 eingebrachte rohrartige Elemente 24, 26 gebildet. Sie entsprechen in ihrer Position in dem Kern 8 und in ihrem Innendurchmesser ihrer jeweiligen Funktion. Leitungskanäle 20 zur Aufnahme von datensignaltechnischen Kabelsträngen weisen tendenziell einen kleinen Innendurchmesser auf als Leitungskanäle 22 zu Bildung von Klimarohren.

Die Härtegrade der Innenhaut 4, der Außenhaut 6 und des Kerns 8 sind so gewählt, dass zur Bildung des Flugzeugrumpfes auf Stringer und Spanten bzw. andersartige Längs- und Umfangsversteifungen verzichtet werden kann.

Bei einem erfindungsgemäßen Verfahren werden die rohrartigen Elemente 24, 26 für die Leitungskanäle 20, 22 in einer Werkzeugform positioniert, die den Kern 8 abbildet. Anschließend wird die Form mit einem geeigneten kunststoffbasierten Rohmaterial zur Bildung des Kerns 8 befüllt. Dann wird die Werkzeugform derart angesteuert, dass sich der schaumartige Kern 8 ausbildet. Die Innenhaut 4 und die Außenhaut 6 werden auf bekannte Art und Weise hergestellt. Nach der Herstellung des Kerns 8, der Innenhaut 4 und der Außenhaut 6 werden diese entsprechend miteinander verbunden.

Offenbart ist ein Rumpfsegment 2 eines Flugzeugrumpfes mit einer Außenhaut 6 und einer Innenhaut 4, die über einen Kern 8 voneinander beanstandet sind, wobei in dem Kern 8 Leitungskanäle 20, 22 zur Systeminstallation integriert sind, sowie ein Verfahren zur Herstellung eines derartigen Rumpfsegments 2.

### Bezugszeichenliste

- 2: Rumpfsegment
- 4: Innenhaut
- 6: Außenhaut
- 8: Kern
- 10: Schmalseite
- 12: Schmalseite
- 14: radial innenliegende Schicht
- 16: radial außenliegende Schicht
- 20: Leitungskanal
- 22: Leitungskanal
- 24: rohrartiges Element
- 26: rohrartiges Element

## Patentansprüche

1. Rumpfsegment (2) eines Flugzeugrumpfes, mit einer kabinenseitigen Innenhaut (4) und einer Außenhaut (6), die einen Kern (8) begrenzen, wobei Leitungskanäle (20, 22) zur Systemintegration in den Kern (8) integriert sind, wobei der Kern (8) aus einem Schaummaterial gebildet ist, **dadurch gekennzeichnet, dass** die Materialhärte des Kerns (8) ausgehend von einem innenhautseitigen Bereich in Richtung der Außenhaut (6) zunimmt.

2. Rumpfsegment nach Anspruch 1, wobei die Innenhaut (4) und die Außenhaut (6) getrennt von dem Kern (8) ausgebildet sind.

3. Rumpfsegment nach Anspruch 1, wobei das Rumpfsegment (2) einstückig ausgebildet ist.

4. Rumpfsegment nach einem der Ansprüche 1, 2 oder 3, wobei der Kern (8) ein mehrschichtiges Schaummaterial ist.

5. Rumpfsegment nach einem der vorhergehenden Ansprüche, wobei die Leitungskanäle (20, 22) von rohrartigen Elementen (24, 26) gebildet sind.

6. Rumpfsegment nach einem der vorhergehenden Ansprüche, wobei die Leitungskanäle (20, 22) derart in den Kern integriert sind, dass deren Wandung von dem Kernmaterial gebildet ist.

7. Rumpfsegment nach einem der vorhergehenden Ansprüche, wobei die Innenhaut (4) eine Seitenwandung einer Kabine darstellt.

8. Verfahren zur Herstellung eines Rumpfsegments nach einem der vorhergehenden Ansprüche, wobei die Leitungskanäle (20, 22) während der Herstellung des schaumartigen Kerns (8) oder nach der Herstellung des schaumartigen Kerns (8) in diesen eingebracht werden, und wobei die Materialhärte des Kerns (8) ausgehend von einem innenhautseitigen Bereich in Richtung der Außenhaut (6) zunehmend ausgebildet wird.

## Claims

1. Fuselage segment (2) of an aircraft fuselage, with a cabin-side inner skin (4) and an outer skin (6), which bound a core (8), wherein line ducts (20, 22) for purposes of systems integration are integrated into the core (8), wherein the core (8) is formed from a foam material, **characterised in that**, the material hardness of the core (8) starting from an inner skin-side region increases in the direction of the outer skin (6).

2. The fuselage segment in accordance with Claim 1, wherein the inner skin (4) and the outer skin (6) are formed separately from the core (8).

3. The fuselage segment in accordance with Claim 1, wherein the fuselage segment (2) is designed in one piece.

4. The fuselage segment in accordance with one of the Claims 1, 2 or 3, wherein the core (8) is a multilayer foam material.

5. The fuselage segment in accordance with one of the preceding claims, wherein the line ducts (20, 22) are formed from pipe-like elements (24, 26).

6. The fuselage segment in accordance with one of the preceding claims, wherein the line ducts (20, 22) are integrated into the core, such that their walls are formed from the core material.

7. The fuselage segment in accordance with one of the preceding claims, wherein the inner skin (4) represents the side walls of a cabin.

8. A method for the manufacture of a fuselage segment in accordance with one of the preceding claims, the line ducts (20, 22) are introduced into the core during the manufacture of the foam-like core (8) or are introduced into the core after the manufacture of the foam-like core (8), and wherein the material hardness of the core (8) starting from an inner skin-side region is designed so s to be increasing in the direction of the outer skin (6).

## Revendications

1. Segment de carlingue (2) d'une carlingue d'avion comprenant une enveloppe intérieure (4) côté cabine et une enveloppe extérieure (6) qui délimitent un noyau (8), sachant que sont intégrés des canaux de direction (20, 22) pour l'intégration système dans le noyau (8), sachant que le noyau (8) est formé dans un matériau de mousse, **caractérisé en ce que** la dureté du matériau du noyau (8) augmente en partant d'une partie côté enveloppe intérieure en direction de l'enveloppe extérieure (6).

2. Segment de carlingue selon la revendication 1, dans lequel l'enveloppe intérieure (4) et l'enveloppe extérieure (6) sont formées séparément du noyau (8).

3. Segment de carlingue selon la revendication 1, dans lequel le segment de carlingue (2) est formé d'un seul tenant.

4. Segment de carlingue selon l'une des revendications 1, 2 ou 3, dans lequel le noyau (8) est un matériau de mousse à plusieurs couches.

5. Segment de carlingue selon l'une des revendications précédentes, dans lequel les canaux de direction (20, 22) sont formés par des éléments tubulaires (24, 26).

6. Segment de carlingue selon l'une des revendications précédentes, dans lequel les canaux de direction (20, 22) sont intégrés de telle façon dans le noyau que leur paroi est formée par le matériau du noyau.

7. Segment de carlingue selon l'une des revendications précédentes, dans lequel l'enveloppe intérieure (4) représente une paroi latérale d'une cabine.

8. Procédé de fabrication d'un segment de carlingue selon l'une des revendications précédentes, dans lequel les canaux de direction (20, 22) sont intégrés dans le noyau (8) de type mousse pendant la fabrication de celui-ci ou après la fabrication de celui-ci, et dans lequel la dureté de matériau du noyau (8) augmente en partant d'une partie côté enveloppe intérieure en direction de l'enveloppe extérieure (6).
